# EUROPÄISCHE PATENTSCHRIFT

(11) **EP 2 048 422 B1**
(45) Veröffentlichungstag und Bekanntmachung des Hinweises auf die Patenterteilung: **10.11.2010**
(21) Anmeldenummer: 08166389.0
(22) Anmeldetag: 10.10.2008
(51) Int. Cl.: F16L 11/08, F16L 11/10, E03C 1/02

(54) **Umflochtener Schlauch mit metallischer Optik**
Braided hose with metallic optics
Tuyau flexible renforcé par tressage avec optique métallique

(30) Priorität: 11.10.2007 DE 102007048889
(43) Veröffentlichungstag der Anmeldung: 15.04.2009
(73) Patentinhaber: Neoperl GmbH, 79379 Müllheim (DE)
(72) Erfinder: Alber Freiherr von Glanstätten, Tassilo, 77971, Kippenheim (DE); Alber Freiherr von Glanstätten, Helmar, 77971, Kippenheim (DE)
(74) Vertreter: Patent- und Rechtsanwaltssozietät Maucher, Börjes & Kollegen

(56) Entgegenhaltungen:
- EP-A- 0 465 837
- EP-A- 1 271 034
- WO-A-01/92771
- DE-U1-202005 004 617
- US-B1- 6 302 152

## Beschreibung

Die Erfindung betrifft einen Flechtschlauch, insbesondere einen Armaturen- oder Brauseschlauch, mit einem Innenschlauch und einem darüber angeordneten Geflecht aus metallisierten und metallisch eingefärbten Geflechtbestandteilen, siehe die US 6,302,152 B1.

Versenkbare Armaturen- oder Brauseschläuche müssen sehr flexibel sein, gute Gleiteigenschaften aufweisen, sowie eine hohe Zug- und Abriebfestigkeit besitzen. Stand der Technik sind umflochtene Schläuche, die ein metallisch deckend eingefärbtes Geflecht aufweisen. Solche Schläuche besitzen eine gute mechanische Festigkeit, die metallische Einfärbung ermöglicht aber nur einen minimalen bleiernen, metallischen Glanz. Ferner sind Schläuche bekannt, die ein Geflecht aus einem eingefärbten Bestandteil aufweisen sowie ein oder mehrere metallisierte Bändchen, welche jedoch aufgrund einer fehlenden Ummantelung nicht abriebfest und nicht korrosionsbeständig sind. Stand der Technik sind weiterhin Schläuche, die ein Geflecht aus metallisierten Bändern aufweisen, die mit einem transparenten Außenschlauch ummantelt sind. Durch die extrudierte Außenhaut sind die metallisierten Bänder vor Abrieb und Korrosion geschützt, jedoch ist der Schlauch wegen dieser Außenhaut auch sehr steif.

Der Erfindung liegt die Aufgabe zu Grunde eine hochwertig anmutende Umflechtung kostengünstig herzustellen, die einen bestmöglichen metallischen Effekt erzielt, wobei gleichzeitig hohe Zugfestigkeit, Abriebfestigkeit und Korrosionsbeständigkeit erhalten wird.

Dieses Ziel konnte überraschenderweise durch einen mit einem Geflecht umflochtenen Schlauch erreicht werden, bei dem für das Geflecht eine Kombination von Geflechtbestandteilen aus einem mit Kunststoff ummantelten Metall- oder metallisierten Strang und Geflechtbestandteilen aus metallisch eingefärbtem Kunststoff verwendet wird.

Demgemäß betrifft die Erfindung einen Schlauch, der einen mit Geflecht umflochtenen Innenschlauch umfasst, bei dem das Geflecht einen ersten Geflechtbestandteil aus einem Metall- oder metallisierten Strang, der mit einem Kunststoff umhüllt ist, und einen zweiten Geflechtbestandteil aus einem metallisch eingefärbten Kunststoff umfasst.

Die so erhaltenen Schläuche zeigen eine überraschend hochwertige metallische Optik und sind dennoch in der Herstellung vergleichsweise preiswert. Ferner werden gegenüber Produkten nach dem Stand der Technik mit metallischem Geflecht eine verbesserte Abriebfestigkeit, eine verbesserte Zugfestigkeit und ein verbesserter Korrosionsschutz erreicht.

Im Folgenden wird die Erfindung anhand bevorzugter Ausführungsformen unter Bezug auf die Zeichnung näher erläutert. Es zeigen:
- Fig. 1: einen erfindungsgemäßen Schlauch mit einem Geflecht mit Längsstreifen, das 50% ummantelte metallisierte Bänder und 50% metallisch eingefärbte Monofile umfasst.
- Fig. 2: einen erfindungsgemäßen Schlauch mit gepunkteter Umflechtung, die 25% ummantelte, metallisierte Bänder und 75% metallisch eingefärbte Monofile umfasst.
- Fig. 3: ein Geflecht aus 100% ummantelten metallisierten Bändern als Referenz für den angestrebten metallischen Effekt.

Der Grundaufbau des erfindungsgemäßen Schlauchs umfasst einen Innenschlauch und ein diesen Innenschlauch umhüllendes Geflecht. Ein solcher Aufbau ist z.B. aus EP-A-0465837 bekannt; die dort beschriebenen Komponenten und Materialien können auch für den Schlauch der vorliegenden Erfindung entsprechend eingesetzt werden, worauf hiermit Bezug genommen wird. Der Schlauch gemäß der Erfindung eignet sich bevorzugt als Armaturen- oder Brauseschlauch und insbesondere als versenkbarer Armaturen- oder Brauseschlauch, wie sie z.B. in Küche und Bad verwendet werden.

Für den Innenschlauch können alle in der Technik bekannten Materialien verwendet werden, insbesondere solche die für einen Armaturen- oder Brauseschlauch verwendet werden. Solche Schläuche sind auch im Handel erhältlich. Der Innenschlauch kann aus einem flexiblen Material bestehen, z.B. aus thermoplastischem oder elastomerem Kunststoff oder Kautschuk, der vorzugsweise weich ist. Geeignete Materialien sind z.B. Weich-PVC, Polyurethan, Siliconkautschuk, Polyolefine wie Polyethylen und Polypropylen, oder Ethylen-Copolymere wie Ethylen-Vinylacetat-Copolymer oder Ethylen-Acrylat-Copolymer.

Der Innenschlauch kann auch als Textil-verstärkter Druckschlauch oder Hohlformgeblasener Wellschlauch ausgebildet sein. Ferner kann der Innenschlauch eine Bewehrung z. B. in Form einer gegebenenfalls ummantelten Draht- oder Kunststoff-Spirale aufweisen. Auch ein zwei- oder mehrschichtiger Aufbau des Innenschlauchs ist möglich, wobei die äußere Schicht des Innenschlauchs z. B. im Coextrusionsverfahren auf die innere Schicht des Innenschlauchs aufgebracht wird.

Die Abmessungen des Innenschlauchs können in breiten Bereichen gewählt werden und richten sich im wesentlich nach dem beabsichtigten Einsatzgebiet. Die Wandstärke des Innenschlauchs kann z.B. 0,2 bis 1,2 mm, sein Innendurchmesser z.B. 5 bis 20 mm oder mehr betragen.

Der Innenschlauch ist mit einer Umflechtung versehen. Dieses Geflecht umfasst mindestens die beiden nachstehend beschriebenen Geflechtbestandteile und besteht vorzugsweise aus diesen beiden Geflechtbestandteilen. Die Geflechtbestandteile sind Stränge bzw. Fäden, die zu dem Geflecht geflochten werden. Sie können jede übliche Gestalt und jeden übliche Querschnittsform aufweisen, die für ein Flechtwerk verwendet werden. Die beiden gemäß der Erfindung eingesetzten Geflechtsbestandteile können gleiche bzw. ähnliche oder unterschiedliche Gestalt und Querschnitte aufweisen. Bei den Geflechtbestandteilen oder Strängen kann es sich z.B. um Fäden, Monofile oder Bänder bzw. Bändchen handeln. Die Querschnittsform kann z.B. rund oder rechteckig, auch mit abgerundeten Ecken, sein. Die Abmessungen der Geflechtbestandteile liegen in den für dieses Einsatzgebiet üblichen Bereichen, Monofile können z.B. einen Durchmesser im Bereich von etwa 0,15 bis etwa 0,75 mm aufweisen, Bänder bzw.

Bändchen können z.B. eine Stärke von etwa 0,15 bis etwa 0,75 mm und eine Breite von etwa 0,5 bis etwa 2 mm aufweisen, aber auch Abmessungen außerhalb dieses Bereichs können geeignet sein. Für den ersten Geflechtbestandteil wird bevorzugt der gleiche Geflechtbestandteil eingesetzt, es können aber auch gegebenenfalls zwei oder mehr unterschiedliche erste Geflechtbestandteile in Kombination eingesetzt werden. Das gleiche gilt für den zweiten Geflechtbestandteil entsprechend.

Die beiden gemäß der Erfindung eingesetzten Geflechtbestandteile umfassen jeweils mindestens einen Kunststoff, einmal zur Umhüllung des Metall- oder metallisierten Strangs und einmal als metallisch einzufärbendes Grundmaterial. Die für die beiden Geflechtbestandteile eingesetzten Kunststoffe können gleich oder verschieden sein. Es kann sich auch um Mischungen von Kunststoffen handeln. Die Kunststoffe schließen auch Kautschuk ein. Der Kunststoff, der für beide Geflechtbestandteile geeignet ist, ist jeweils bevorzugt ein thermoplastischer oder elastomerer Kunststoff. Ferner ist der für die beiden Geflechtbestandteile eingesetzte Kunststoff bevorzugt jeweils transparent oder durchscheinend. Beispiele für allgemein einsetzbare Kunststoffe sind Polyolefine, wie gerecktes und ungerecktes Polyethylen, Polypropylen, Polyamide, Polyester wie Polyethylenterephthalat, modifiziertes Hart-PVC, Cellulosederivate oder ähnliche harte oder halbharte Kunststoffe.

Die vorliegende Erfindung beinhaltet die Verwendung eines ersten Geflechtbestandteils, der einen Metall- oder metallisierten Strang umfasst, der mit einem Kunststoff, bevorzugt einem transparenten Kunststoff, umhüllt ist. Durch die Kunststoffumhüllung wird der Metall- bzw. metallisierte Strang vor Korrosion geschützt und außerdem ermöglicht sie eine höhere Abriebfestigkeit. Bevorzugt wird für die Ummantelung des ersten Geflechtbestandteils ein abriebfester Kunststoff verwendet, wie z.B. Polyamid. Die Ummantelung kann durch jedes herkömmliche, dem Fachmann bekannte Verfahren erfolgen, z.B. durch Aufextrudieren des Kunststoffs auf den Metall- oder metallisierten Strang oder Einhüllen oder Einlegen des Strangs in einen Kunststoff, z.B. in Form einer oder mehrerer Folien, der dann anschließend verklebt bzw. verschweißt wird.

Der Metall- oder metallisierte Strang kann jede beliebige Gestalt aufweisen, z.B. ein Faden oder Draht, Monofile oder Band, wobei Bänder bevorzugt sind. Es kann ein Metallstrang eingesetzt werden, der aus einem geeigneten Metall besteht. Bevorzugt wird aber ein metallisierter Strang verwendet, bei dem ein beliebiges Grundmaterial metallisiert worden ist, d.h. mit einem Metall beschichtet worden ist. Solche Metallisierungen und Verfahren zur Metallisierung sind allgemein bekannt. Bevorzugt handelt es sich bei dem Grundmaterial um Kunststoff. Als Grundmaterial eignet sich z.B. eine Folie, wie z.B. eine Kunststofffolie, insbesondere in Form eines Bandes. Solche metallisierten Stränge, wie die bevorzugten metallisierten Bänder, sind auch im Handel erhältlich, z. B. als Aluminium-bedampfte Polyester- oder Polypropylen-Folien.

In einer besonders bevorzugten Ausführungsform werden für den ersten Geflechtbestandteil metallisierte Bänder eingesetzt, die mit einem transparenten Kunststoff ummantelt sind, um die Abriebfestigkeit und Korrosionsbeständigkeit zu erhöhen. Als erster Geflechtbestandteil eignen sich auch sogenannte Metalleffektfäden.

Ein solches ummanteltes, metallisiertes Band ist aber aufwändig in der Herstellung und besitzt nur eine geringe Zugfestigkeit. Gleichzeitig sind die Materialkosten für die Herstellung eines solchen Bandes hoch.

Überraschenderweise konnte gemäß der vorliegenden Erfindung trotzdem ein wirtschaftlich und technisch interessantes Produkt mit ausgezeichneter metallischer Optik erhalten werden, indem der erste Geflechtbestandteil, bevorzugt die ummantelten, metallisierten Bänder, mit einer weiteren Komponente höherer Festigkeit kombiniert wurde, nämlich einem metallisch eingefärbten Kunststoff als zweitem Geflechtbestandteil.

Kostengünstige Standard-Kunststoffe erreichen eine hohe mechanische Festigkeit durch eine Verstreckung. Eine Verstreckung ist verfahrenstechnisch kostengünstig umzusetzen, allerdings nicht für ein ummanteltes Band, da die Metallisierung dabei aufreißt. In der vorliegenden Erfindung wird daher als zweiter Geflechtbestandteil ein Kunststoff verwendet, der metallisch eingefärbt ist, was zum Beispiel durch Einfärbung mit Metallpigmenten oder Metalleffektpigmenten erreicht wird. Der erhaltene metallische Effekt ist zwar deutlich schlechter als bei einer Metallisierung (metallische Beschichtung), durch die durchscheinende Einfärbung wird aber der metallische Effekt in Verbindung mit dem metallisierten Geflechtbestandteil nochmals verstärkt.

Auf die für den zweiten Geflechtbestandteil geeigneten Kunststoffe und Formen wurde bereits vorstehend verwiesen. Für den zweiten Geflechtbestandteil werden bevorzugt Monofile verwendet. Ferner ist der zweite Geflechtbestandteil bevorzugt durchscheinend. Die metallische Einfärbung des Kunststoffs wird insbesondere durch Beimischung von Metall- oder Metalleffektpigmenten in den Kunststoff erhalten. Der Typ und die Menge des eingesetzten Metallpigments oder Metalleffektpigments hängen natürlich von dem gewünschten Metalleffekt ab und können vom Fachmann nach Bedarf ohne weiteres ausgewählt werden. Solche Metall- oder Metalleffektpigmente sind im Handel erhältlich; Beispiele sind Aluminiumpigmente, Aluminiumbronzepigmente, Kupfer- und Goldbronzepigmente. Weitere Einzelheiten zu Metalleffektpigmenten finden sich z.B. in Ullmanns Encyklopädie der technischen Chemie, 4. Aufl., Bd. 18, S. 629 ff., Verlag Chemie, 1979; und bei Buxbaum, Industrial Inorganic Pigments, S. 207 ff., VCH Verlagsgesellschaft, 1993.

Zur Herstellung des Geflechts kann der Anteil der beiden Geflechtbestandteile in breiten Bereichen variieren. Im allgemeinen werden zur Herstellung des Geflechts, bezogen auf die Anzahl aller für das Geflecht eingesetzten Geflechtbestandteile, zweckmäßigerweise 15 bis 85% des ersten Geflechtbestandteils und 85 bis 15% des zweiten Geflechtbestanteils und bevorzugt 25 bis 50% des ersten Geflechtbestandteils und 75 bis 50% des zweiten Geflechtbestandteils, verwendet. In einer bevorzugten Ausführungsform enthält das Geflecht etwa gleiche Anteile der beiden Bestandteile, also z.B. 40 bis 55% des ersten Geflechtbestandteils und 60 bis 45% des zweiten Geflechtbestandteils, besonders bevorzugt sind der Einsatz von 50% des ersten Geflechtbestandteils und 50% des zweiten Geflechtbestandteils. Gegebenenfalls können zusätzlich ein oder mehrere, von den ersten und zweiten Geflechtbestandteilen verschiedene Geflechtbestandteile zusätzlich verwendet werden, z.B. in einem Anteil von 0 bis 10%, bezogen auf die Anzahl aller für das Geflecht eingesetzten Geflechtbestandteile, dies ist in der Regel aber nicht bevorzugt.

Die Umflechtung des Innenschlauchs kann auf übliche Weise erfolgen, vorzugsweise wird der Innenschlauch so dicht mit dem Geflecht versehen, dass die gewünschte Zug-und Druckfestigkeit des Schlauchs erzielt wird. Die Geflechtbestandteile werden bevorzugt dicht an dicht und vorzugsweise ausschließlich diagonal geflochten werden, d.h. axial zum Innenschlauch verlaufende Geflechtbestandteile werden möglichst vermieden, um die gewünschte Flexibilität des Schlauchs zu gewährleisten. Die Druckfestigkeit des Schlauches lässt sich anhand des Flechtwinkels und der Anzahl der geflochtenen Geflechtbestandteile, die auch allgemein als Fäden bezeichnet werden, optimieren. Die Anzahl kann z.B. im Bereich von 24 bis einigen hundert (z.B. 300) Fäden für einen Schlauch liegen.

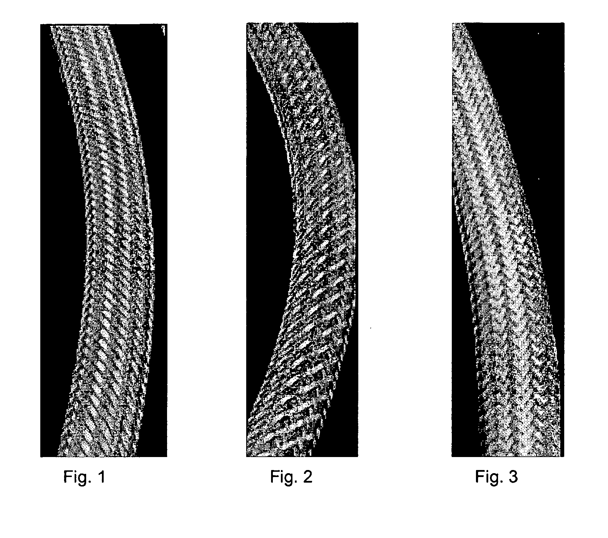

Die metallische Wirkung des Geflechts kann ferner über die Flechtstruktur positiv beeinflusst werden, also über die Anordnung der Geflechtbestandteile. Je weniger die Flechtstruktur wahrgenommen wird, desto stärker ist die metallische Wirkung des Schlauchs. Dies wird insbesondere durch Längs- und Querstreifen, sowie Punktmuster erreicht. Durch den Einsatz von nur 50% des ersten Geflechtbestandteils, insbesondere von ummantelten metallisierten Bändern, kann erstaunlicherweise ein metallischer Effekt erzielt werden, der dem eines Geflechts, das zu 100% aus metallisierten Bändern besteht, nahezu entspricht. Hierzu werden metallisierte (erster Geflechtbestandteil) und metallisch eingefärbte Geflechtbestandteile in Streifen nebeneinander angeordnet (siehe Fig. 1). Um starke metallische Effekte bei geringeren Anteilen des ersten Geflechtbestandteils, z.B. 25% oder weniger, zu erreichen, wird der erste Geflechtbestandteil vorzugsweise punktförmig angeordnet (siehe Fig. 2). In einer bevorzugten Ausführungsform sind die ersten und zweiten Geflechtbestandteile in entgegengesetzter Flechtrichtung angeordnet, so dass eine längsgestreifte Struktur entsteht, was insbesondere für ein Geflecht mit einem relativ hohen Anteil an erstem Geflechtbestandteil (z.B. 30% oder mehr) vorteilhaft ist.

Der Schlauch der Erfindung kann außerdem zusätzliche Komponenten aufweisen, wie sie in der Praxis üblich sind. Beispielsweise kann zwischen dem Innenschlauch und dem Geflecht eine Bewehrung, vorzugsweise eine ring- oder spiralförmige Bewehrung, angeordnet sein. Ferner kann über dem Geflecht eine Außenhaut, vorzugsweise aus Kunststoff, angebracht werden, z.B. um eine glattere Oberfläche zu erzielen. Geeignete Materialien und Ausführungsformen für eine Bewehrung und/oder eine Außenhaut können z.B. der EP-A-0465837 entnommen werden, worauf hiermit Bezug genommen wird.

Das folgende Ausführungsbeispiel dient der weiteren Erläuterung der Erfindung, ohne diese zu beschränken.

### BEISPIEL

Ein radial bewehrter Innenschlauch wird hergestellt durch Umwicklung eines Innenschlauchs von 0,4 mm Wandstärke mit einem Polypropylenband von 1,3 mm Höhe und 2 mm Breite. Anschließend wird der Schlauch mit einer 0,3 mm dünnen Polypropylenfolie ummantelt, wobei ein radial bewehrter Innenschlauch mit 12 mm Außendurchmesser und 8 mm Innendurchmesser erhalten wird.

Dieser radial bewehrte Innenschlauch wird mit 24 gleichlaufenden metallisierten Bändern und 24 gegenlaufenden metallisch eingefärbten Monofilen umflochten. Die metallisierten Bänder werden hierbei dadurch erhalten, dass man eine verstreckte Polypropylenfolie von 0,05 mm Dicke zunächst mit Aluminium bedampft, dann auf 0,85 mm Breite zuschneidet und zuletzt mit einer dünnen Polyamidschicht ummantelt, so dass ein Band von 1,2 mm Breite und 0,4 mm Dicke entsteht. Die metallisch eingefärbten Monofile erhält man durch Extrusion von mit 0,1 Gew.% Aluminium-Flakes eingefärbtem Polypropylen, welches auf eine Dicke von 0,4 mm verstreckt wird.

## Patentansprüche

1. Schlauch, umfassend einen mit Geflecht umflochtenen Innenschlauch, **dadurch gekennzeichnet, dass** das Geflecht einen ersten Geflechtbestandteil aus einem Metall- oder metallisierten Strang, der mit einem Kunststoff umhüllt ist, und einen zweiten Geflechtbestandteil aus einem metallisch eingefärbten Kunststoff umfasst.

2. Schlauch nach Anspruch 1, **dadurch gekennzeichnet, dass** er ein Armaturen- oder Brauseschlauch ist.

3. Schlauch nach Anspruch 1 oder 2, **dadurch gekennzeichnet, dass** der erste Geflechtbestandteil eine mit Kunststoff ummantelte metallisierte Folie umfasst.

4. Schlauch nach einem der Ansprüche 1 bis 3, **dadurch gekennzeichnet, dass** der zweite Geflechtbestandteil einen mit Metallpigmenten oder Metalleffektpigmenten eingefärbten Kunststoff umfasst.

5. Schlauch nach einem der Ansprüche 1 bis 4, **dadurch gekennzeichnet, dass** der zweite Geflechtbestandteil durchscheinend eingefärbt ist.

6. Schlauch nach einem der Ansprüche 1 bis 5, **dadurch gekennzeichnet, dass** das Geflecht, bezogen auf die Anzahl der eingesetzten Geflechtbestandteile, 15 bis 85% des ersten Geflechtbestandteils und 85 bis 15% des zweiten Geflechtbestandteils umfasst.

7. Schlauch nach Anspruch 6, **dadurch gekennzeichnet, dass** das Geflecht aus 50% des ersten Geflechtbestandteils und 50% des zweiten Geflechtbestandteils besteht.

8. Schlauch nach einem der Ansprüche 1 bis 7, **dadurch gekennzeichnet, dass** die ersten und zweiten Geflechtbestandteile in entgegengesetzter Flechtrichtung angeordnet sind, so dass eine längsgestreifte Struktur entsteht.

9. Schlauch nach einem der Ansprüche 1 bis 7, **dadurch gekennzeichnet, dass** der erste Geflechtbestandteil punktförmig angeordnet ist.

10. Schlauch nach einem der Ansprüche 1 bis 9, **dadurch gekennzeichnet, dass** der metallisierte Strang ein metallisiertes Band ist.

11. Schlauch nach einem der Ansprüche 1 bis 10, **dadurch gekennzeichnet, dass** der zweite Geflechtbestandteil ein Monofil ist.

12. Schlauch nach einem der Ansprüche 1 bis 11, **dadurch gekennzeichnet, dass** zwischen dem Innenschlauch und dem Geflecht eine Bewehrung angeordnet ist.

13. Schlauch nach einem der Ansprüche 1 bis 12, **dadurch gekennzeichnet, dass** auf das Geflecht eine Außenhaut aufgebracht ist.

## Claims

1. Hose comprising an inner hose surrounded by braid, **characterised in that** the braid comprises a first braid component consisting of a metal or metallised strip which is encased in a plastic, and a second braid component consisting of a metallic-coloured plastic.

2. Hose according to claim 1, **characterised in that** it is a plumbing hose or shower hose.

3. Hose according to claim 1 or 2, **characterised in that** the first braid component comprises a metallised foil encased in plastics.

4. Hose according to one of claims 1 to 3, **characterised in that** the second braid component comprises a plastic coloured with metal pigments or metal-effect pigments.

5. Hose according to one of claims 1 to 4, **characterised in that** the second braid component is translucently coloured.

6. Hose according to one of claims 1 to 5, **characterised in that** the braid comprises 15 to 85% of the first braid component and 85 to 15% of the second braid component, based on the number of braid components used.

7. Hose according to claim 6, **characterised in that** the braid consists of 50% of the first braid component and 50% of the second braid component.

8. Hose according to one of claims 1 to 7, **characterised in that** the first and second braid components are arranged in the opposite direction of braiding so as to form a structure with lengthwise stripes.

9. Hose according to one of claims 1 to 7, **characterised in that** the first braid component is arranged in a dot pattern.

10. Hose according to one of claims 1 to 9, **characterised in that** the metallised strip is a metallised ribbon.

11. Hose according to one of claims 1 to 10, **characterised in that** the second braid component is a monofilament.

12. Hose according to one of claims 1 to 11, **characterised in that** a reinforcement is provided between the inner hose and the braid.

13. Hose according to one of claims 1 to 12, **characterised in that** an outer skin is applied to the braid.

## Revendications

1. Tuyau flexible comportant un tube souple intérieur entouré d'une structure tressée, **caractérisé par le fait que** ladite structure tressée comprend un premier élément constitutif en un boyau métallique ou métallisé, gainé d'une matière plastique, et un second élément constitutif en une matière plastique à coloration métallique dans la masse.

2. Tuyau flexible selon la revendication 1, **caractérisé par le fait qu'**il se présente comme un flexible de robinetterie, ou de pomme de douche.

3. Tuyau flexible selon la revendication 1 ou 2, **caractérisé par le fait que** le premier élément constitutif de la structure tressée comprend un feuil métallisé enrobé de matière plastique.

4. Tuyau flexible selon l'une des revendications 1 à 3, **caractérisé par le fait que** le second élément constitutif de la structure tressée comprend une matière plastique colorée, dans la masse, par des pigments métalliques ou des pigments à effet métal.

5. Tuyau flexible selon l'une des revendications 1 à 4, **caractérisé par le fait que** le second élément constitutif de la structure tressée offre une coloration translucide dans la masse.

6. Tuyau flexible selon l'une des revendications 1 à 5, **caractérisé par le fait que**, par rapport au nombre des éléments constitutifs employés, la structure tressée est composée du premier élément constitutif à raison de 15 à 85%, et du second élément constitutif à raison de 85 à 15%.

7. Tuyau flexible selon la revendication 6, **caractérisé par le fait que** la structure tressée est composée du premier élément constitutif à raison de 50%, et du second élément constitutif à raison de 50%.

8. Tuyau flexible selon l'une des revendications 1 à 7, **caractérisé par le fait que** les premier et second éléments constitutifs de la structure tressée sont agencés avec sens de tressage opposés, ce qui procure une structure rigidifiée dans la direction longitudinale.

9. Tuyau flexible selon l'une des revendications 1 à 7, **caractérisé par le fait que** le premier élément constitutif de la structure tressée est agencé en forme de points.

10. Tuyau flexible selon l'une des revendications 1 à 9, **caractérisé par le fait que** le boyau métallisé est un ruban métallisé.

11. Tuyau flexible selon l'une des revendications 1 à 10, **caractérisé par le fait que** le second élément constitutif de la structure tressée est un monofilament.

12. Tuyau flexible selon l'une des revendications 1 à 11, **caractérisé par le fait qu'**une armature est interposée entre le tube souple intérieur et la structure tressée.

13. Tuyau flexible selon l'une des revendications 1 à 12, **caractérisé par le fait qu'**une enveloppe extérieure est implantée sur la structure tressée.
